# FASCICULE DE BREVET EUROPEEN

(11) **EP 4 392 352 B1**
(45) Date de publication et mention de la délivrance du brevet: **25.06.2025**
(21) Numéro de dépôt: 22765161.9
(22) Date de dépôt: 24.08.2022
(51) Int. Cl.: B65G 47/22, B07C 5/02, B07C 1/06

(54) **MACHINE DE TRI D'OBJETS COMPRENANT UN CONVOYEUR D'ALIGNEMENT D'OBJETS**
MASCHINE ZUM SORTIEREN VON GEGENSTÄNDEN MIT EINEM FÖRDERER ZUM AUSRICHTEN VON GEGENSTÄNDEN
MACHINE FOR SORTING OBJECTS, COMPRISING A CONVEYOR FOR ALIGNING OBJECTS

(30) Priorité: 25.08.2021 FR 2108891
(43) Date de publication de la demande: 03.07.2024
(73) Titulaire: Solystic, 92227 Bagneux (FR)
(72) Inventeur: BREYSSE, Steve, 07800 SAINT GEORGES LES BAINS (FR); REYNAUD, David-Henri, 26000 VALENCE (FR); PANO, Damien, 26000 VALENCE (FR); REBOUL, Jean-Michel, 26260 SAINT DONAT (FR)
(74) Mandataire: IP Trust
(86) Numéro de dépôt international: PCT/EP2022/073617
(87) Numéro de publication internationale: WO 2023/025858

(56) Documents cités:
- WO-A1-2017/060198
- JP-A- S56 122 718
- US-A- 4 273 237
- US-A1- 2014 041 991

## Description

### Domaine technique

L'invention concerne le domaine du tri d'objets de type colis ou paquets. L'invention concerne plus particulièrement une machine de tri d'objets de type colis ou paquets comprenant un convoyeur d'alignement capable d'aligner les objets pendant leur convoyage avant leur injection sur un carrousel de tri.

### Technique antérieure

Il existe aujourd'hui des machines de tri d'objets de type colis ou paquets capables de trier des objets hétérogènes, c'est-à-dire des objets de taille, de poids et de forme variés.

Ces machines de tri comprennent typiquement une entrée d'alimentation apte à alimenter selon un pas régulier les objets sur un convoyeur de tri.

Les objets sont ensuite convoyés en série sur le convoyeur de tri pour être injectés tour à tour dans un godet d'un carrousel de tri.

Généralement, le convoyeur de tri est composé d'une pluralité de convoyeurs, dont un convoyeur amont conçu pour être alimenté en objets par l'entrée d'alimentation et un convoyeur aval conçu alimenter en objets le carrousel de tri, les deux convoyeurs étant conçus pour convoyer les objets selon une certaine direction de convoyage.

Afin de garantir une bonne injection de chaque objet dans un godet du carrousel de tri, les objets doivent être préalablement alignés sur le convoyeur de tri dans la direction de convoyage.

Le convoyeur de tri comprend pour cela un convoyeur d'alignement disposé entre le convoyeur amont et le convoyeur aval, de sorte que le convoyeur d'alignement est alimenté en objets par le convoyeur amont et alimente à son tour le convoyeur aval.

Le convoyeur d'alignement comprend généralement une rive de taquage qui s'étend dans la direction de convoyage et des rouleaux aptes à dévier les objets contre la rive de taquage.

Les objets sont ainsi déplacés latéralement selon une certaine direction de taquage déviée par rapport à la direction de convoyage jusqu'à venir au contact de la rive de taquage.

Ainsi, l'ensemble des objets venant au contact de la rive de taquage sont alignés dans la direction de convoyage et se déplacent dans la direction de convoyage jusqu'à être injectés sur le carrousel de tri.

Cependant, le contact à grande vitesse des objets avec les rouleaux peut provoquer l'éjection des objets hors du convoyeur d'alignement, la modification du pas des objets ou bien encore la modification de leur orientation sur le convoyeur d'alignement.

Certaines machines de tri ont donc remplacé les rouleaux des convoyeurs d'alignement par des bandes de convoyage rectilignes, comme mentionné dans le document WO2017/060198, qui divulgue une machine selon le préambule de la revendication 1 et qui s'étendent selon une certaine direction de taquage déviée par rapport à la direction de convoyage.

Si ce type de convoyeur d'alignement permet d'éviter les problèmes précités pour de nombreux types d'objets, il ne convient pas pour le tri d'objets plats et flexibles du type petit paquet import, également appelé PPI.

En effet, il est courant que les PPI se retrouvent coincés entre la rive de taquage et les bandes de convoyage nécessitant l'arrêt de la machine de tri et l'intervention d'un opérateur.

Les objets sont alors au mieux abimés et au pire totalement détruits.

Il arrive également que les objets soient seulement ralentis du fait du pincement entre la rive de taquage et les bandes de convoyage modifiant le pas entre les objets.

### Exposé de l'invention

L'invention a donc pour objectif de fournir une machine de tri capable de remédier aux problèmes précités.

A cette fin, l'invention porte sur une machine de tri selon la revendication 1.

L'idée à la base de l'invention est d'éviter que les objets se coincent entre la rive de taquage et les bandes de convoyage en positionnant les bandes de convoyages à hauteur et au plus près de la rive de taquage.

L'idée est également de réduire l'emprise au sol de la machine de tri en réduisant la taille du convoyeur d'alignement.

La machine de tri selon l'invention peut présenter les caractéristiques suivantes :
- la rive de taquage comprend une courroie à entrainement continue conçue pour entrainer les objets dans la direction de convoyage lorsqu'ils sont au contact de la rive de taquage ;
- le convoyeur amont, le convoyeur aval et la courroie ont une vitesse de convoyage V1 équivalente ;
- les bandes de convoyages ont une vitesse de convoyage V2 où V2=V1/Cos α, où α correspond à l'angle de déviation ;
- le convoyeur d'alignement comprend une plaque à faible coefficient de friction s'étendant horizontalement depuis la rive de taquage en direction des extrémités aval des bandes de convoyages, ladite plaque ayant un profil complémentaire aux extrémités des bandes de convoyage de manière à venir sensiblement boucher des espaces laissés libres entre les extrémités aval des bandes de convoyages et la rive de taquage ;
- le convoyeur d'alignement comprend pour chaque bande de convoyage une poulie de guidage comprenant un épaulement central, chaque bande de convoyage comprenant une gorge centrale qui s'étend longitudinalement de sorte que l'épaulement de la poulie s'insère dans la gorge de la bande de convoyage pour guider la bande de convoyage pendant sa rotation ;
- le convoyeur d'alignement comprend un premier rouleau motorisé disposé à une extrémité amont du convoyeur d'alignement selon la direction de convoyage conçu pour mettre en rotation les bandes de convoyage les plus proches de la rive de taquage et un second rouleau motorisé disposé à une extrémité aval du convoyeur d'alignement selon la direction de convoyage conçu pour mettre en rotation les bandes de convoyage les plus éloignées de la rive de taquage, les premier et second rouleaux motorisés étant pilotés de façon synchrone ;
- le convoyeur d'alignement comprend un dispositif de tension équipé d'une poulie et d'un tenseur pour chaque bande de convoyage, chaque dispositif de tension étant conçu pour maintenir une tension constante dans une bande de convoyage ;
- chaque bande de convoyage comprend un bord longitudinal du côté aval dans la direction de convoyage présentant un profil chanfreiné.

### Brève description des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
La [Fig.1] illustre schématiquement une machine de tri d'objets selon l'invention.
La [Fig.2] est une représentation schématique vue de dessus d'un convoyeur d'alignement selon l'invention disposé entre un convoyeur amont et un convoyeur aval.
La [Fig.3] est une représentation schématique en coupe transversale d'un convoyeur d'alignement selon l'invention avec un agrandissement d'une partie du convoyeur d'alignement référencée 3A.
La [Fig.4] illustre schématiquement en perspective un convoyeur d'alignement selon l'invention.
La [Fig.5] est une représentation schématique vue de dessus d'un convoyeur d'alignement selon l'invention.
La [Fig.6] est une représentation schématique vue de dessous d'un convoyeur d'alignement selon l'invention.
La [Fig.7] est une représentation schématique en coupe longitudinale d'une partie du convoyeur d'alignement selon l'invention.
La [Fig.8] est une représentation schématique vue de dessus d'un convoyeur d'alignement sans bandes de convoyage selon l'invention.
La [Fig.9] est une représentation schématique en coupe transversale d'une bande de convoyage et de sa poulie de guidage selon l'invention.

### Description détaillée de l'invention

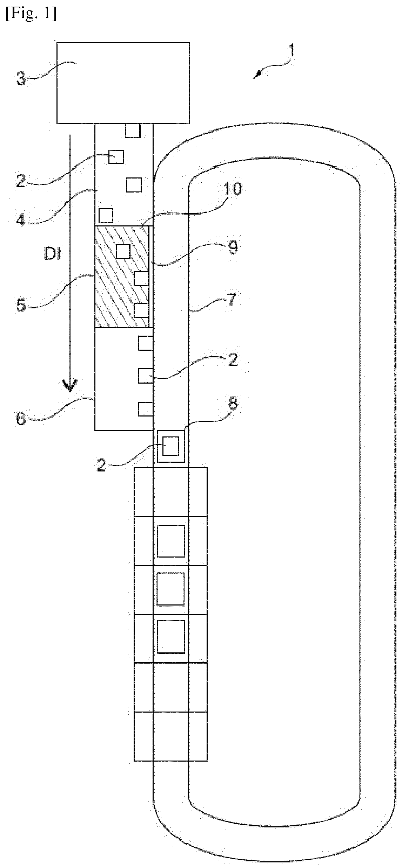

La machine de tri 1 d'objets 2 selon l'invention représentée en [Fig.1], est particulièrement bien adaptée pour trier des objets 2 en fonction d'une certaine information de tri, telle qu'une adresse de destination.

Par objets, l'invention vise plus particulièrement des objets de type colis ou paquet, de taille, de forme et de poids variés, comme par exemple des colis postaux fait de carton rigide en 30x30cm ou bien des PPI en plastique mou de moins de 5x5cm.

La machine de tri 1 selon l'invention comprend notamment une entrée d'alimentation 3 en objets 2, un ensemble de convoyeurs de tri 4,5 et 6 et un carrousel de tri 7 à godets 8.

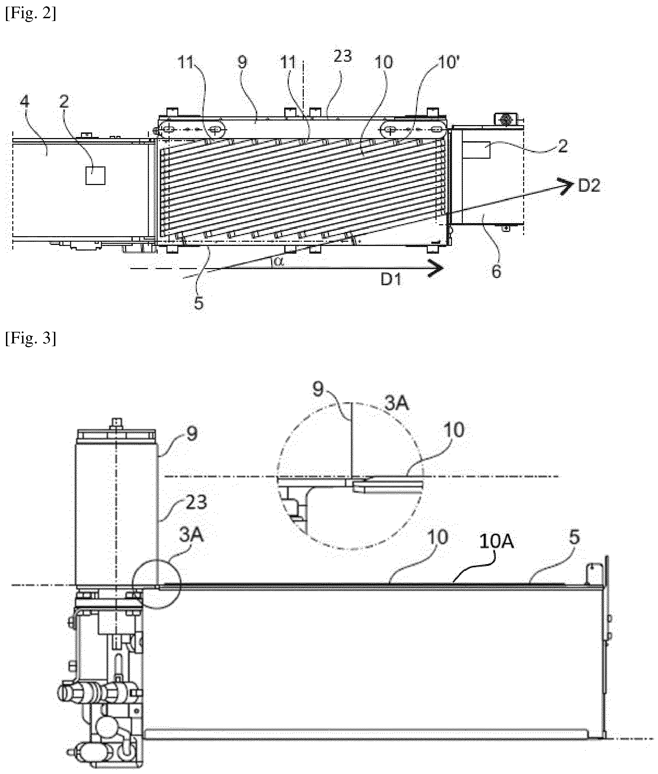

L'ensemble de convoyeurs de tri comprend ici un convoyeur amont 4 et un convoyeur aval 5, représentés sur les figures 1 et 2, chacun conçu pour convoyer les objets 2 selon une certaine direction de convoyage D1 et un convoyeur d'alignement 6, représenté sur les figures 1 à 5, disposé entre le convoyeur amont 4 et le convoyeur aval 5 conçu pour aligner les objets 2 dans la direction de convoyage D1.

Ainsi, l'entrée d'alimentation 3 de la machine de tri 1 permet d'alimenter le convoyeur amont 4 en objets 2 en les espaçant les uns par rapport aux autres selon un certain pas constant mais sans les aligner dans la direction de convoyage D1.

Le convoyeur amont 4 alimente quant à lui le convoyeur d'alignement 6 qui alimente à son tour le convoyeur aval 5 qui lui-même alimente les godets 8 du carrousel de tri 7.

Plus particulièrement, le convoyeur d'alignement 6 selon l'invention comprend une rive de taquage 9 qui s'étend dans la direction de convoyage D1 et des bandes de convoyage 10 rectilignes qui s'étendent selon une certaine direction de taquage D2 déviée par rapport à la direction de convoyage D1 selon un certain angle de déviation α.

Ainsi, les objets 2 convoyés sur le convoyeur d'alignement 6 sont dans un premier temps convoyés dans la direction de taquage D2 puis dans la direction de convoyage D1 une fois au contact de la rive de taquage 9.

Les bandes de convoyages 10 présentent ici une surface de convoyage 10A sur laquelle sont convoyés les objets 2. La rive de taquage 9 s'étend quant à elle en hauteur transversalement à la surface de convoyage 10A des bandes de convoyage 10.

Plus précisément, et sans restreindre la portée de l'invention, la rive de taquage 9 pourra s'étendre en hauteur transversalement à la direction de convoyage D1 entre une extrémité haute E1 et une extrémité basse E2. La surface de convoyage s'étendra ainsi entre cette l'extrémité haute et basse de la rive de taquage 9 pour former une sorte de T.

On comprendra ici que la surface de convoyage 10A des bandes de convoyage 10 sera plus haut que l'extrémité basse E2 de la rive de taquage 9 et moins haute que l'extrémité haute E1.

Grâce à cet agencement, les objets 2 ne peuvent pas être entrainés sous la rive de taquage 9 et venir se coincer entre la rive de taquage 9 et les bandes de convoyage 10.

Les objets 2 sont ainsi orientés et référencés latéralement tout en conservant le pas qui leur a été attribué lors de leur insertion sur le convoyeur amont 4.

La rive de taquage 9 représentées sur les figures 1 à 5 est positionnée à gauche du convoyeur d'alignement 6 mais pourrait tout aussi bien être positionnée à droite du convoyeur d'alignement 6 avec un agencement des bandes de convoyage 10 symétriquement opposées par rapport à la direction de convoyage D1.

On comprendra également que l'angle de déviation α dépendra de la longueur et/ou de la largeur du convoyeur d'alignement 6, de sorte que plus la longueur et/ou la largeur du convoyeur d'alignement 6 sera réduite et plus l'angle de déviation α sera important.

Selon l'invention, chaque bande de convoyage 10 est également terminée par une extrémité aval 10' dans la direction de taquage qui vient à fleur et à hauteur de la rive de taquage 9.

Plus précisément, les bandes de convoyage 10 et la rive de taquage 9 présentent chacune une surface de contact pour les objets 2 agencée de manière à ce que la surface de contact des bandes de convoyage 10 soit au moins à hauteur de la surface de contact de la rive de taquage 9, comme visible sur la [Fig.3] et plus particulièrement sur l'agrandissement 3A.

Cela signifie que les bandes de convoyage 10 peuvent être réparties horizontalement sur toute la hauteur de la face de contact de la rive de taquage 9.

Cet agencement fait que les extrémités aval 10' des bandes de taquage 10 forment les unes après les autres dans la direction de convoyage D1 une sorte de crénelage contre la rive de taquage 9 qui, en venant à fleur de la rive de taquage, créé des espaces vides de forme globalement triangulaire.

Ainsi, le convoyeur d'alignement 6 pourra par exemple comprendre une plaque 11 fixe à faible coefficient de friction s'étendant horizontalement depuis la rive de taquage 9 en direction des extrémités aval 10' des bandes de convoyages 10, comme visible sur les figures 2,4,5 et 8.

La plaque présente plus particulièrement un profil complémentaire aux extrémités des bandes de convoyage de manière à venir sensiblement boucher les espaces laissés vides.

Par sensiblement boucher les espaces laissés vides, on entend que la plaque 11 vient à fleur des bandes de convoyage 10 sans venir toutefois au contact de celles-ci.

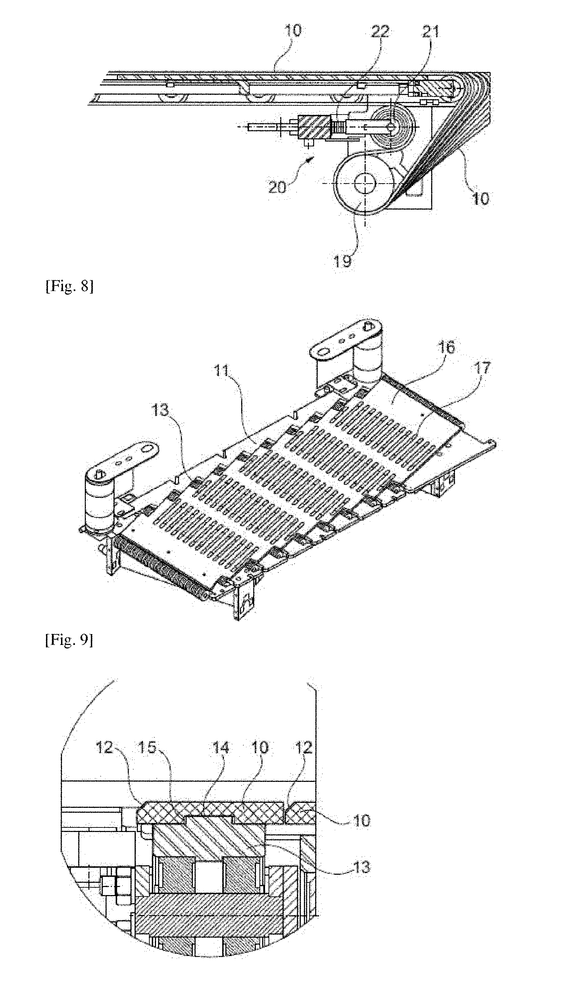

Chaque bande de convoyage 10 pourra également présenter un bord 12 longitudinal du côté aval dans la direction de convoyage D1 présentant un profil chanfreiné, biseauté ou arrondi, comme visible en [Fig.9].

Le profil chanfreiné, biseauté ou arrondi pourra s'étendre sur toute la longueur de la bande et plus particulièrement sur le coin supérieur faisant face à la rive de taquage.

Grâce à ces plaques 11 et au profil chanfreiné, biseauté ou arrondi des bandes de convoyage 10, le risque que des objets 2 se coincent entre les extrémités aval 10' des bandes de convoyage 10 est réduit.

Une fois que les objets 2 sont en contact avec la rive de taquage 9 et reprennent un déplacement parallèle à la direction de convoyage D1, ces objets 2 vont générer un effort de frottement sur les bandes de convoyage 10 qui va avoir tendance à repousser les bandes de convoyage 10 en les éloignant de la rive de taquage 9.

Ainsi, le convoyeur d'alignement 6 pourra également comprendre pour chaque bande de convoyage 10 une poulie de guidage 13 comprenant un épaulement central 14.

Chaque épaulement central (14) permet ici de maintenir une bande de convoyage 10 dans sa direction de taquage D2 de sorte que toutes les bandes de convoyages restent parallèles entres elles dans la direction de taquage D2.

Chaque bande de convoyage 10 comprendra dans ce cas une gorge centrale 15 s'étendant longitudinalement de sorte que l'épaulement 14 de la poulie de guidage 13 s'insère dans la gorge 15 de la bande de convoyage 10 pour guider la bande de convoyage 10 pendant sa rotation.

Une sole 16 de glissement pour bandes de convoyage, représenté en [Fig.8], pourra également être prévue avec des réglettes 17 de guidage s'étendant dans la direction de taquage D2 pour améliorer le guidage des bandes de convoyage 10 pendant leur rotation.

Grâce à ces agencements, les bandes de convoyage 10 ne sont pas décalées ou déviées par le frottement des objets 2 lorsqu'ils sont convoyés contre la rive de taquage 9 dans la direction de convoyage D1.

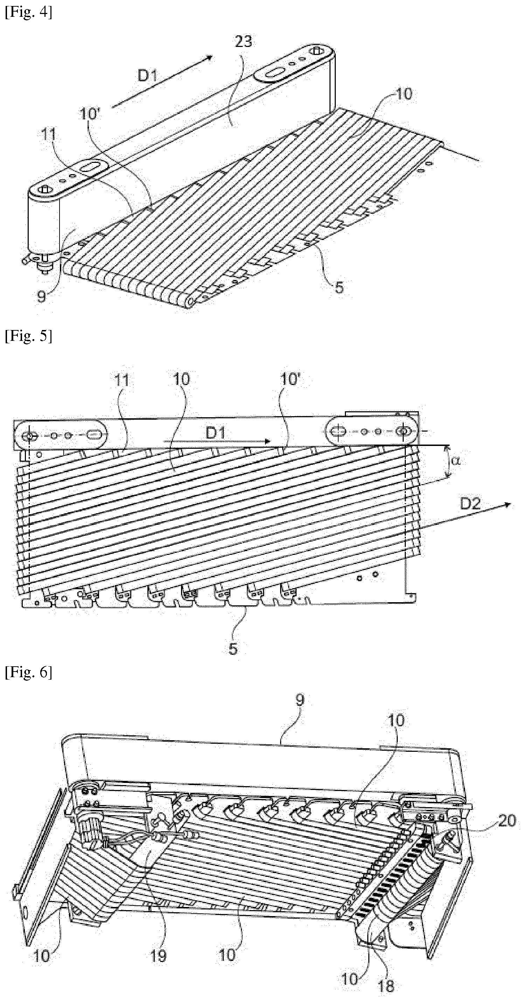

Aussi, afin de respecter la géométrie et l'encombrement au sol de la machine de tri 1, le convoyeur d'alignement 6 pourra par exemple comprendre un premier rouleau 18 motorisé disposé à une extrémité amont du convoyeur d'alignement 6 selon la direction de convoyage D1 conçu pour mettre en rotation les bandes de convoyage 10 les plus proches de la rive de taquage 9, par exemple la première moitié des bandes de convoyage 10 au plus près de la rive de taquage 9 comme représenté sur la [Fig.6].

Dans cette configuration, le convoyeur d'alignement 6 comprendra également un second rouleau 19 motorisé disposé à une extrémité aval du convoyeur d'alignement 6 selon la direction de convoyage D1 conçu pour mettre en rotation les bandes de convoyage 10 les plus éloignées de la rive de taquage 9, dans le cas présent la seconde moitié des bandes de convoyage 10 les plus éloignées de la rive de taquage 9.

Les premier et second rouleaux 18 et 19 motorisés seront ici pilotés de façon synchrone par une unité de contrôle commande.

Sans restreindre la portée de l'invention, pour augmenter davantage la compacité du convoyeur d'alignement, le rouleau moteur (19) pourra entrainer les bandes de convoyage 10 les plus proches du point d'entrée de la rive de taquage 9 selon la direction de convoyage D1 tandis que le rouleau moteur (18) pourra entrainer les bandes de convoyage 10 les plus éloignées.

Le convoyeur d'alignement 6 pourra également comprendre un dispositif de tension 20, visible en [Fig.7], équipé d'une poulie 21 et d'un tenseur 22 à ressort pour chaque bande de convoyage 10, chaque dispositif de tension 20 étant conçu pour maintenir une tension constante dans une bande de convoyage 10.

Ainsi, les dispositifs de tension 20 peuvent être réglés indépendamment de sorte à appliquer la même tension dans l'ensemble des bandes de convoyages 10 du convoyeur d'alignement 6.

La rive de taquage 9 selon l'invention pourra également comprendre une courroie 23 à entrainement continue conçue pour entrainer les objets 2 dans la direction de convoyage D1 lorsqu'ils sont au contact de la rive de taquage 9.

Grâce à cette courroie 23, les objets 2 venant au contact de la rive de taquage 9 conservent une vitesse constante dans la direction de convoyage D1 de sorte à maintenir le pas entre les objets 2.

A titre d'exemple, le convoyeur amont 4, le convoyeur aval 5 et la courroie 23 ont une vitesse de convoyage V1 équivalente, alors que les bandes de convoyages 10 ont une vitesse de convoyage V2 où V2=V1/Cos α, α correspondant à l'angle de déviation α.

Ce rapport de vitesse permet de garantir la conservation du pas des objets 2, de leur alimentation sur le convoyeur amont 4 jusqu'à leur injection dans les godets 8 du carrousel de tri 7.

## Revendications

1. Machine de tri (1) d'objets (2) de type colis ou paquets comprenant un convoyeur amont (4) et un convoyeur aval (5) conçus pour convoyer les objets selon une certaine direction de convoyage (D1), ladite machine de tri comprenant également un convoyeur d'alignement (6) alimenté en objets par le convoyeur amont, ledit convoyeur d'alignement étant conçu pour aligner les objets les uns après les autres dans la direction de convoyage et pour alimenter le convoyeur aval en objets une fois les objets alignés, ledit convoyeur d'alignement comprenant une rive de taquage (9) qui s'étend dans la direction de convoyage et des bandes de convoyage (10) rectilignes qui s'étendent selon une certaine direction de taquage (D2) déviée par rapport à la direction de convoyage selon un certain angle de déviation (α) de sorte que les objets convoyés sur le convoyeur d'alignement sont convoyés dans la direction de taquage puis dans la direction de convoyage une fois au contact de la rive de taquage, les bandes de convoyages présentant une surface de convoyage (10A) sur laquelle sont convoyés les objets, et la rive de taquage s étendant en hauteur transversalement à la surface de convoyage des bandes de convoyage (10), **caractérisée en ce que** chaque bande de convoyage (10) est terminée par une extrémité aval dans la direction de taquage qui vient à fleur et à hauteur de la rive de taquage (9).

2. Machine de tri d'objets selon la revendication 1, **caractérisée en ce que** la rive de taquage comprend une courroie (23) à entrainement continue conçue pour entrainer les objets dans la direction de convoyage lorsqu'ils sont au contact de la rive de taquage.

3. Machine de tri d'objets selon l'une quelconque des revendications précédentes, **caractérisée en ce que** le convoyeur amont, le convoyeur aval et la courroie à entrainement continue ont une vitesse de convoyage V1 équivalente.

4. Machine de tri d'objets selon la revendication 3, **caractérisée en ce que** les bandes de convoyages ont une vitesse de convoyage V2, défini par V2=V1/Cos α, où α correspond à l'angle de déviation (α).

5. Machine de tri d'objets selon l'une quelconque des revendications précédentes, **caractérisée en ce que** le convoyeur d'alignement comprend pour chaque bande de convoyage une poulie de guidage (13) comprenant un épaulement (14) central, chaque bande de convoyage comprenant une gorge (15) centrale qui s'étend longitudinalement de sorte que l'épaulement de la poulie s'insère dans la gorge de la bande de convoyage pour guider la bande de convoyage pendant sa rotation.

6. Machine de tri d'objets selon l'une quelconque des revendications précédentes, **caractérisée en ce que** le convoyeur d'alignement comprend une plaque (11) à faible coefficient de friction s'étendant horizontalement depuis la rive de taquage en direction des extrémités aval des bandes de convoyages, ladite plaque ayant un profil complémentaire aux extrémités des bandes de convoyage de manière à venir sensiblement boucher des espaces laissés libres entre les extrémités aval des bandes de convoyages et la rive de taquage.

7. Machine de tri d'objets selon l'une quelconque des revendications précédentes, **caractérisée en ce que** le convoyeur d'alignement comprend un premier rouleau (18) motorisé disposé à une extrémité amont du convoyeur d'alignement selon la direction de convoyage conçu pour mettre en rotation les bandes de convoyage les plus proches de la rive de taquage et **en ce que** le convoyeur d'alignement comprend également un second rouleau (19) motorisé disposé à une extrémité aval du convoyeur d'alignement selon la direction de convoyage conçu pour mettre en rotation les bandes de convoyage les plus éloignées de la rive de taquage, les premier et second rouleaux motorisés étant pilotés de façon synchrone.

8. Machine de tri d'objets selon l'une quelconque des revendications précédentes, **caractérisée en ce que** le convoyeur d'alignement comprend un dispositif de tension (20) équipé d'une poulie (21) et d'un tenseur (22) à ressort pour chaque bande de convoyage, chaque dispositif de tension étant conçu pour maintenir une tension constante dans une bande de convoyage.

9. Machine de tri d'objets selon l'une quelconque des revendications précédentes, **caractérisée en ce que** chaque bande de convoyage comprend un bord (12) longitudinal du côté aval dans la direction de convoyage présentant un profil chanfreiné.

## Patentansprüche

1. Sortiermaschine (1) für Objekte (2) vom Typ Päckchen oder Paket, umfassend einen vorgeschalteten Förderer (4) und einen nachgeschalteten Förderer (5), die dazu konzipiert sind, die Objekte in eine bestimmte Förderrichtung (D1) zu befördern, wobei die Sortiermaschine außerdem einen Ausrichtförderer (6) umfasst, der vom vorgeschalteten Förderer mit Objekten versorgt wird, wobei der Ausrichtförderer dazu konzipiert ist, die Objekte nacheinander in Förderrichtung auszurichten und den nachgeschalteten Förderer mit Objekten zu versorgen, nachdem die Objekte ausgerichtet sind, wobei der Ausrichtförderer eine Rüttelkante (9) umfasst, die sich in Förderrichtung erstreckt, und geradlinige Förderbänder (10), die sich in eine bestimmte Rüttelrichtung (D2) erstrecken, die relativ zur Förderrichtung um einen bestimmten Ablenkwinkel (α) abgelenkt ist, sodass die auf dem Ausrichtförderer beförderten Objekte in Rüttelrichtung und dann in Förderrichtung befördert werden, nachdem sie die Rüttelkante berühren, wobei die Förderbänder eine Förderfläche (10A) aufweisen, auf der die Objekte befördert werden, und wobei sich die Rüttelkante in der Höhe quer zur Förderfläche der Förderbänder (10) erstreckt,
**dadurch gekennzeichnet, dass** jedes Förderband (10) durch ein in Rüttelrichtung nachgeschaltetes Ende abgeschlossen ist, das bündig und auf Höhe der Rüttelkante (9) endet.

2. Objektsortiermaschine nach Anspruch 1, **dadurch gekennzeichnet, dass** die Rüttelkante ein kontinuierlich angetriebenes Band (23) aufweist, das dazu konzipiert ist, die Objekte in Förderrichtung mitzunehmen, wenn sie mit der Rüttelkante in Kontakt sind.

3. Objektsortiermaschine nach einem der vorstehenden Ansprüche,
**dadurch gekennzeichnet, dass** das vorgeschaltete Förderband, das nachgeschaltete Förderband und das kontinuierlich angetriebene Band eine äquivalente Fördergeschwindigkeit V1 aufweisen.

4. Objektsortiermaschine nach Anspruch 3, **dadurch gekennzeichnet, dass** die Förderbänder eine Fördergeschwindigkeit V2 aufweisen, die durch V2=V1/Cos α definiert ist, wobei α dem Ablenkwinkel (α) entspricht.

5. Objektsortiermaschine nach einem der vorstehenden Ansprüche,
**dadurch gekennzeichnet, dass** der Ausrichtförderer für jedes Förderband eine Führungsrolle (13) mit einer zentralen Schulter (14) umfasst, wobei jedes Förderband eine zentrale Nut (15) umfasst, die sich in Längsrichtung erstreckt, sodass die Schulter der Rolle in die Nut des Förderbands eingreift, um das Förderband während seiner Drehung zu führen.

6. Objektsortiermaschine nach einem der vorstehenden Ansprüche,
**dadurch gekennzeichnet, dass** der Ausrichtförderer eine Platte (11) mit niedrigem Reibungskoeffizienten umfasst, die sich horizontal von der Rüttelkante in Richtung der nachgeschalteten Enden der Förderbänder erstreckt, wobei die Platte ein Profil aufweist, das komplementär zu den Enden der Förderbänder ist, um so die zwischen den nachgeschalteten Enden der Förderbänder und der Rüttelkante freigebliebenen Zwischenräume im Wesentlichen zu verschließen.

7. Objektsortiermaschine nach einem der vorstehenden Ansprüche,
**dadurch gekennzeichnet, dass** der Ausrichtförderer eine erste motorgetriebene Rolle (18) umfasst, die in Förderrichtung an einem vorgeschalteten Ende des Ausrichtförderers angeordnet ist und dazu konzipiert ist, die der Rüttelkante am nächsten gelegenen Förderbänder in Drehung zu versetzen, und dass der Ausrichtförderer außerdem eine zweite motorgetriebene Rolle (19) umfasst, die in Förderrichtung an einem nachgeschalteten Ende des Ausrichtförderers angeordnet ist und dazu konzipiert ist, die von der Rüttelkante am weitesten entfernten Förderbänder in Drehung zu versetzen, wobei die erste und die zweite motorgetriebene Rolle synchron angesteuert werden.

8. Objektsortiermaschine nach einem der vorstehenden Ansprüche,
**dadurch gekennzeichnet, dass** der Ausrichtförderer eine Spannvorrichtung (20) umfasst, die mit einer Rolle (21) und einem federbelasteten Spanner (22) für jedes Förderband ausgestattet ist, wobei jede Spannvorrichtung dazu konzipiert ist, eine konstante Spannung in einem Förderband aufrechtzuerhalten.

9. Objektsortiermaschine nach einem der vorstehenden Ansprüche,
**dadurch gekennzeichnet, dass** jedes Förderband auf der in Förderrichtung nachgeschalteten Seite eine Längskante (12) mit abgeschrägtem Profil aufweist.

## Claims

1. Machine for sorting (1) objects (2) such as parcels or packages, comprising an upstream conveyor (4) and a downstream conveyor (5) designed to convey the objects in a certain conveying direction (DI), said sorting machine also comprising an alignment conveyor (6) fed with objects by the upstream conveyor, said alignment conveyor being designed to align the objects one after the other in the conveying direction and to feed the objects to the downstream conveyor once the objects have been aligned, said alignment conveyor comprising a jogging edge (9) which extends in the conveying direction and rectilinear conveyor belts (10) which extend in a certain jogging direction (D2) deviated from the conveying direction by a certain deviation angle (α) so that the objects conveyed on the alignment conveyor are conveyed in the jogging direction and then in the conveying direction once in contact with the jogging edge, the conveyor belts having a conveying surface (10A) whereupon the objects are conveyed, and the jogging edge extending in height transversely to the conveying surface of the conveyor belts (10),
**characterized in that** each conveyor belt (10) is terminated by a downstream end in the jogging direction, which is flush with and level with the jogging edge (9).

2. Object sorting machine according to claim 1, **characterized in that** the jogging edge comprises a continuously driven belt (23) designed to drive the objects in the conveying direction when they are in contact with the jogging edge.

3. Object sorting machine according to either of the preceding claims,
**characterized in that** the upstream conveyor, the downstream conveyor and the continuously driven belt have an equivalent conveying speed V1.

4. Object sorting machine according to claim 3, **characterized in that** the conveyor belts have a conveying speed V2, defined by V2=V1/Cos α, where α corresponds to the deviation angle (α).

5. Object sorting machine according to any of the preceding claims,
**characterized in that** the alignment conveyor comprises for each conveyor belt a deflection pulley (13) comprising a central shoulder (14), each conveyor belt comprising a central groove (15) which extends longitudinally so that the shoulder of the pulley fits into the groove of the conveyor belt in order to guide the conveyor belt during the rotation thereof.

6. Object sorting machine according to any of the preceding claims,
**characterized in that** the alignment conveyor comprises a low-friction plate (11) extending horizontally from the jogging edge toward the downstream ends of the conveyor belts, said plate having a profile complementary to the ends of the conveyor belts so as substantially to close gaps left free between the downstream ends of the conveyor belts and the jogging edge.

7. Object sorting machine according to any of the preceding claims,
**characterized in that** the alignment conveyor comprises a first motorized roller (18) arranged at an upstream end of the alignment conveyor in the conveying direction, designed to rotate the conveyor belts closest to the jogging edge, **and in that** the alignment conveyor also comprises a second motorized roller (19) arranged at a downstream end of the alignment conveyor in the conveying direction, designed to rotate the conveyor belts furthest from the jogging edge, the first and second motorized rollers being operated synchronously.

8. Object sorting machine according to any of the preceding claims,
**characterized in that** the alignment conveyor comprises a tensioning device (20) equipped with a pulley (21) and a spring-loaded tensor (22) for each conveyor belt, each tensioning device being designed to maintain a constant tension in a conveyor belt.

9. Object sorting machine according to any of the preceding claims,
**characterized in that** each conveyor belt comprises a longitudinal edge (12) on the downstream side in the conveying direction having a chamfered profile.
